# EUROPÄISCHE PATENTSCHRIFT

(11) **EP 4 247 624 B1**
(45) Veröffentlichungstag und Bekanntmachung des Hinweises auf die Patenterteilung: **28.10.2026**
(21) Anmeldenummer: 21815949.9
(22) Anmeldetag: 16.11.2021
(51) Int. Cl.: B29C 65/08

(54) **VERFAHREN ZUM BETREIBEN EINER ULTRASCHALLSCHWEISSMASCHINE**
METHOD FOR OPERATING AN ULTRASONIC WELDING MACHINE
PROCÉDÉ DE FONCTIONNEMENT D'UNE MACHINE DE SOUDAGE À ULTRASONS

(30) Priorität: 17.11.2020 DE 102020130325
(43) Veröffentlichungstag der Anmeldung: 27.09.2023
(73) Patentinhaber: Herrmann Ultraschalltechnik GmbH & Co. KG, 76307 Karlsbad (DE)
(72) Erfinder: RÖSSLER, Sven, 76316 Malsch (DE); AUGENSTEIN, Micha, 75210 Keltern (DE)
(74) Vertreter: WSL Patentanwälte Partnerschaft mbB
(86) Internationale Anmeldenummer: PCT/EP2021/081792
(87) Internationale Veröffentlichungsnummer: WO 2022/106392

(56) Entgegenhaltungen:
- WO-A2-2006/042251
- JP-A- S63 315 223
- US-B1- 6 458 228

## Beschreibung

Die vorliegende Erfindung betrifft ein Verfahren zum Betreiben einer Ultraschallschweißmaschine, bei welcher während eines Schweißvorgangs ein flächiges Material kontinuierlich durch einen zwischen einer Sonotrode und einem Amboss gebildeten Spalt mit einer Schweißgeschwindigkeit hindurchbewegt wird. Dabei wird die Sonotrode mit einer Ultraschallfrequenz in eine Schwingung mit einer Schweißamplitude angeregt. Bei dem Bewegen des flächigen Materials, das beispielsweise aus mehreren miteinander zu verschweißenden Folien bestehen kann, wird von dem Amboss und/oder von der Sonotrode eine Schweißkraft auf das flächige Material ausgeübt. Häufig wird mittels der Sonotrode über das zu verschweißende Material eine Kraft auf den stationären Amboss ausgeübt. Es ist aber auch möglich, dass mit dem Amboss eine Kraft auf das flächige Material aufgebracht wird.

Gerade beim Verschweißen von Folien, die ihrerseits aus verschiedenen Schichten bestehen, ist es häufig gewünscht, dass bei dem Schweißvorgang lediglich die einander zugewandten Folienschichten durch den Ultraschalleintrag aufgeschmolzen werden, während die anderen Folienschichten nicht aufgeschmolzen werden. Dies lässt sich durch geeignete Wahl der Schmelzpunkte der einzelnen Schichten einer Folie realisieren.

In letzter Zeit kommen jedoch zunehmend Monomaterialien zum Einsatz, bei denen die einzelnen Schichten aus dem gleichen Material gefertigt sind, jedoch unterschiedlich physikalisch behandelt wurden. Zum Beispiel kann eine Schicht monoaxial oder biaxial gereckt sein, während eine andere Schicht dies nicht ist. Die unterschiedlichen Schichten weisen jedoch dann, da sie aus demselben Material hergestellt worden sind, sehr ähnliche Schmelztemperaturen auf, sodass beim Schweißen solcher Folien das Prozessfenster, d.h. der Temperaturbereich, der zwischen den zu verschweißenden Folien während der Ultraschallbearbeitung erreicht werden darf und muss, sehr eng ist.

Dies ist insbesondere beim Starten der Ultraschallschweißmaschine häufig ein Problem, da diese sich während des Betriebes langsam erwärmt. Zudem kann es auch zu Schwankungen der Schweißgeschwindigkeit, zu Schwankungen der Materialdicke und anderen Änderungen im System kommen, die bewirken können, dass das Prozessfenster verlassen wird, und die Verschweißung des flächigen Materials entweder zu stark, so dass andere Schichten beeinträchtigt werden, oder zu schwach erfolgt, so dass sich die Verschweißung im späteren Gebrauch wieder löst und die Schweißverbindung undicht wird.

Zudem kann es notwendig sein, die Schweißgeschwindigkeit absichtlich zu ändern. Bei einer höheren Schweißgeschwindigkeit wird bei ansonsten gleich bleibenden Bedingungen jedoch eine geringere Temperatur an den zu verbindenden Folienschichten erreicht als bei einer geringeren Schweißgeschwindigkeit. Bei jeder Änderung des Prozesses müssen daher wieder ideale Prozessparameter gefunden werden, um eine zuverlässige Verschweißung sicherzustellen. Bei einem engen Prozessfenster kann dies nur von sehr erfahrenem Personal erzielt werden. Zudem kann dies sehr zeitaufwendig sein.

Die WO 2006/042251 A2 betrifft eine Ultraschallbearbeitung von Laminaten, bei welcher eine Temperatur einer Laminatoberfläche ermittelt und zumindest ein Prozessparameter auf Grundlage dieser Temperatur beeinflusst werden kann. Die US 6 458 228 B1 betrifft eine Steuerung der Schweißtemperatur eines Verpackungsmaterials bei einer Ultraschallsiegeleinrichtung. Die JP S63-315223 A betrifft eine Vorrichtung zum Verbinden von Kunststoffbahnen unter Verwendung von Ultraschallschwingungen. Diese Dokumente werden als technischer Hintergrund der vorliegenden Anmeldung genannt.

Es ist daher Aufgabe der vorliegenden Erfindung, ein Verfahren anzugeben, mit dessen Hilfe eine Ultraschallschweißmaschine einfach und vor allem zuverlässig betrieben werden kann.

Diese Aufgabe wird durch ein Verfahren nach Anspruch 1 gelöst. Vorteilhafte Ausführungsformen ergeben sich aus den abhängigen Ansprüchen.

Kommt es daher während des Betriebes zu einer Geschwindigkeitsänderung der Schweißgeschwindigkeit, hat dies unmittelbar Auswirkungen auf die Temperatur des flächigen Materials, nachdem es den Spalt durchlaufen hat. Diese Temperaturabweichung wird erfindungsgemäß festgestellt und die Schweißamplitude entsprechend variiert. Fällt beispielsweise die gemessene IST-Temperatur unter die vorbestimmte SOLL-Temperatur, wird erfindungsgemäß die Schweißamplitude erhöht. Erhöht sich stattdessen die IST-Temperatur über die vorbestimmte SOLL-Temperatur, wird erfindungsgemäß die Schweißamplitude reduziert.

In einer bevorzugten Ausführungsform wird das erfindungsgemäße Verfahren im Rahmen einer kontinuierlichen Regelung innerhalb des Schweißintervalls verwirklicht.

Die beschriebenen Temperaturänderungen können nicht nur durch eine Veränderung der Schweißgeschwindigkeit auftreten. Es ist auch möglich, dass die zu verschweißenden Materialien Dickenschwankungen aufweisen, was sich ebenfalls in Temperaturvariationen niederschlägt. Zudem ist insbesondere der Beginn des Schweißvorgangs nach längerem Stillstand von einer Temperaturveränderung betroffen, da sich die zunächst abgekühlten Komponenten, wie z.B. die Sonotrode und das Gegenwerkzeug, nach dem Start des Schweißvorgangs langsam erwärmen. Durch das erfindungsgemäße Verfahren kann der zwangsläufig zu Beginn des Schweißverfahrens anfallende Ausschuss deutlich reduziert werden.

In einer weiteren bevorzugten Ausführungsform wird während der Schweißphase die Schweißgeschwindigkeit und/oder die Schweißkraft konstant gehalten. Insbesondere dann, wenn die Schweißgeschwindigkeit vom Benutzer verändert wird und nicht lediglich durch Spannungen im Material verändert wird, ist in einer bevorzugten Ausführungsform vorgesehen, dass die Schweißkraft in Abhängigkeit von der Schweißgeschwindigkeit eingestellt wird. Dazu kann beispielsweise eine Tabelle hinterlegt werden, in welcher nachgeschlagen werden kann, welche Schweißkraft bei welcher Schweißgeschwindigkeit von Vorteil ist. Dadurch ist sichergestellt, dass sich der Schweißvorgang zumindest sehr nahe am gewünschten Prozessfenster befindet. Die Feinabstimmung erfolgt dann erfindungsgemäß über die Regelung der Schweißamplitude.

Erfindungsgemäß ist vorgesehen, dass vor der Schweißphase während einer Startphase die Schweißgeschwindigkeit von null auf einen vorbestimmten Schweißgeschwindigkeitswert erhöht wird.

Mit anderen Worten ist der Schweißphase, während der die erfindungsgemäße Regelung stattfindet, eine Startphase vorangestellt, in welcher die Schweißparameter, d.h. unter anderem die Schweißgeschwindigkeit, die Schweißamplitude und die Schweißkraft auf vorbestimmte Werte eingestellt werden.

Erfindungsgemäß wird während der Startphase die Schweißamplitude nicht in Abhängigkeit von dem Vergleichsergebnis variiert.

Die Startphase ist daher dazu da, die Schweißparameter auf einen vorbestimmten Wert einzustellen, der dem optimalem Zustand möglichst nahekommt. Im Idealfall erfolgt dann bereits der Schweißvorgang im gewünschten Prozessfenster. Doch auch wenn der Schweißvorgang dann nicht sofort im gewünschten Prozessfenster stattfindet, kann durch die erfindungsgemäße Regelung der Schweißamplitude, der Schweißprozess sehr schnell im gewünschten Prozessfenster durchgeführt werden, denn nach der Startphase beginnt die Schweißphase, in welcher durch eine Variation der Schweißamplitude in Abhängigkeit von der gemessenen Temperatur die Feinoptimierung der Schweißparameter erfolgt.

In einer weiteren bevorzugten Ausführungsform ist vorgesehen, dass die Startphase nach einer vorgegebenen Zeitdauer endet und die Schweißphase beginnt. Beispielsweise könnte hier eine typische Zeitdauer, die benötigt wird, um das System in einen quasi kontinuierlichen eingeschwungenen Zustand zu bringen, als vorbestimmte Zeitdauer verwendet werden.

Alternativ dazu kann der Übergang von der Startphase in die Schweißphase auch dann erfolgen, sobald die Schweißamplitude den vorbestimmten Schweißamplitudenwert erreicht und/oder sobald die Schweißkraft auf die vorbestimmte Schweißkraft erhöht wurde. Es ist auch möglich, dann von der Startphase in die Schweißphase überzugehen, wenn die IST-Temperatur die SOLL-Temperatur erreicht oder überschritten hat.

In einer weiteren bevorzugten Ausführungsform ist der Startphase noch eine Standbyphase vorgeschaltet, in welcher die Schweißgeschwindigkeit null ist und die Schweißamplitude und/oder der Schweißdruck auf einem vorbestimmten reduzierten Schweißamplitudenwert bzw. auf einem vorbestimmten reduzierten Schweißdruckwert gehalten wird. Die reduzierten Werte betragen in einer bevorzugten Ausführungsform zwischen 40 und 60 % der während der Startphase angestrebten Werte.

Bei einer Unterbrechung des Schweißvorganges aufgrund einer Störung oder mangels Zufuhr an Produkt wird das System nicht vollständig ausgeschaltet, sondern in die Standbyphase versetzt. Um möglichst schnell wieder einsatzbereit zu sein, wird auch innerhalb der Standbyphase die Schweißamplitude und/oder die Schweißkraft auf einen vorbestimmten reduzierten Wert eingestellt.

Weitere Vorteile, Merkmale und Anwendungsmöglichkeiten der vorliegenden Erfindung werden deutlich anhand der folgenden Beschreibung einer bevorzugten Ausführungsform und der zugehörigen Figuren.

Es zeigen:
- Figur 1: eine schematische Darstellung der Schweißmaschine und
- Figur 2: Darstellungen der Zeitabhängigkeit der einzelnen Ultraschallparameter.

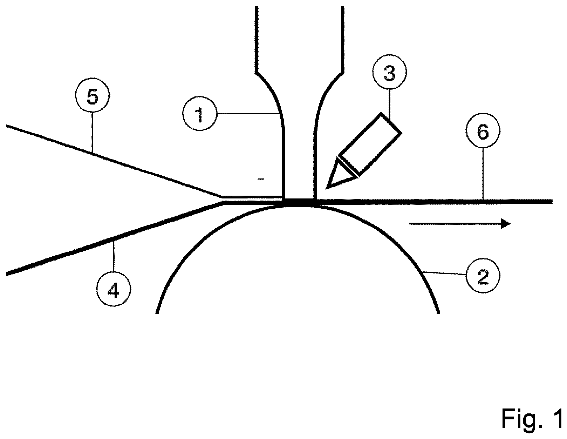

In Figur 1 ist schematisch eine Ultraschallschweißanlage gezeigt. Diese weist eine Sonotrode 1 und ein Gegenwerkzeug 2 auf. Zwischen der Sonotrode 1 und dem Gegenwerkzeug 2 werden zwei Materialbahnen 4, 5 hindurchgeführt und in der Schweißanlage miteinander verschweißt. Dazu wird die Sonotrode 1 mit einer Ultraschallschwingung mit einer Schweißamplitude angeregt. Bei der Bearbeitung mit Ultraschall werden zumindest die Bereiche der Materialbahnen 4 und 5, die einander zugewandt sind, aufgeschmolzen, sodass sich die beiden Materialbahnen 4, 5 miteinander verbinden und die Sandwichstruktur 6 entsteht.

Die Bearbeitung erfolgt in der Regel kontinuierlich, d.h. während des Schweißens werden die Materialbahnen 4, 5 bzw. die Sandwichstruktur 6 in Pfeilrichtung mit einer Schweißgeschwindigkeit durch den Spalt bewegt. Erfindungsgemäß wird nun mittels eines Temperatursensors 3 die Temperatur der verschweißten Materialbahnen, d.h. der Sandwichstruktur 6, gemessen und zwar vorzugsweise unmittelbar nach der erfolgten Verschweißung.

Um ein besonders zuverlässiges Schweißergebnis zu erzielen, ist es notwendig, dass während des Schweißens eine gewünschte Aufschmelztemperatur in den einander zugewandten Schichten der Materialbahnen 4 und 5 erreicht wird. Auch wenn der Ort der Verschweißung durch die Sonotrode 1 bzw. das Gegenwerkzeug 2 verdeckt ist, sodass dort eine Temperaturmessung nicht möglich ist, ist der Temperatursensor 3 jedoch so angeordnet, dass er, unmittelbar nachdem die verschweißte Folienbahn 6 außer Kontakt mit der Sonotrode 1 tritt, die Temperatur erfasst. Auch wenn die erfasste Temperatur nicht die Schmelztemperatur ist, so ist die erfasste Temperatur dennoch ein Maß für die erreichte Schweißtemperatur.

Die Schweißtemperatur hängt von einer Vielzahl von Faktoren ab, die sich im laufenden Betrieb absichtlich oder unabsichtlich ändern können. Beispielsweise kann sich die gezielte Schweißtemperatur durch eine Veränderung der Schweißgeschwindigkeit verändern. Auch Materialdickenschwankungen der Materialbahnen 4, 5 verändern die erzielte Schweißtemperatur. Schließlich wird die Temperatur auch von der aufgebrachten Schweißkraft, der Schweißamplitude und der Oberflächentemperatur der Sonotrode 1 und des Gegenwerkzeuges 2 beeinflusst.

Dies bedeutet, dass zu Beginn des Schweißverfahrens die Sonotrode 1 und das Gegenwerkzeug 2 abgekühlt sind und daher eine geringere Schweißtemperatur erzielt wird als dies später, wenn die Sonotrode 1 und das Gegenwerkzeug 2 auf ihrer Arbeitstemperatur sind, der Fall ist.

Erfindungsgemäß wird daher die Schweißamplitude geregelt und zwar in Abhängigkeit von dem Vergleichsergebnis der gemessenen IST-Temperatur mit einer vorbestimmten SOLL-Temperatur.

Dies bedeutet, dass solange die beteiligten Schweißwerkzeuge, nämlich die Sonotrode 1 und das Gegenwerkzeug 2, ihre Arbeitstemperatur noch nicht erreicht haben, der Schweißvorgang mit einer etwas erhöhten Schweißamplitude durchgeführt wird. Auch die Geschwindigkeitsschwankungen können durch die Regelung der Schweißamplitude akzeptiert werden, ohne dass es zu einer Verschlechterung des Schweißergebnisses kommt.

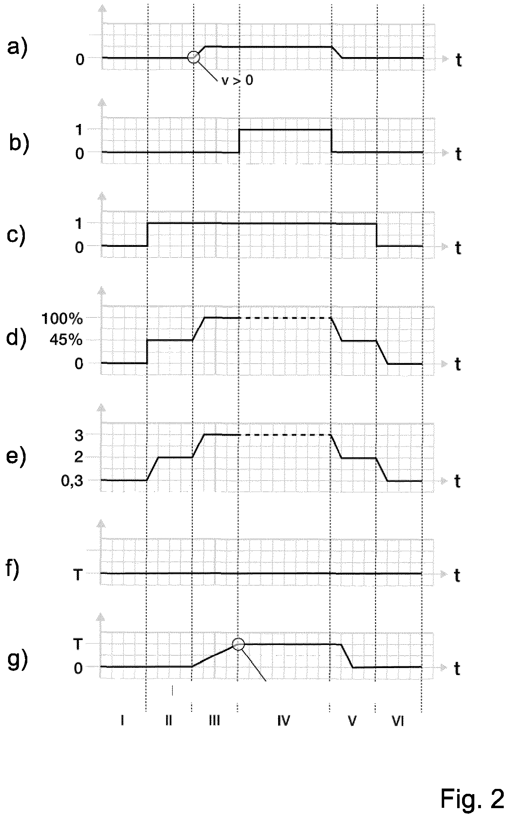

Zur Erläuterung sind in Figur 2 sieben Schweißparameter, nämlich a) Schweißgeschwindigkeit, b) Regelsituation, c) Zustand der Ultraschallanregung, d) Schweißamplitude, e) Schweißdruck und f) SOLL-Temperatur sowie g) IST-Temperatur übereinander in einer zeitabhängigen (t) Darstellung in willkürlichen Einheiten aufgetragen. Bei der folgenden Betrachtung kommt es lediglich auf den den qualitativen Verlauf der Parameter nicht aber auf deren tatsächlichen Wert an. Da sich der Schweißdruck aus der Schweißkraft und der Fläche auf welche die Schweißkraft aufgebracht wird, berechnen lässt, können Schweißdruck und Schweißkraft leicht ineinander umgerechnet werden.

Die Bearbeitung erfolgt in sechs Phasen I-VI.

Phase I ist ein Zustand, in welchem die Schweißanlage ausgeschaltet ist. Schweißgeschwindigkeit (a), Schweißamplitude (d) und Schweißdruck (e) sind jeweils Null. Es erfolgt keine Ultraschallanregung und keine Regelung. Die IST- Temperatur (g) ist auf ihrem Minimum.

Phase II ist eine Standbyphase, in welcher die Schweißgeschwindigkeit (a) null ist, jedoch die Ultraschallanregung (c) aktiviert und sowohl eine reduzierte Ultraschallamplitude (d) als auch ein reduzierter Schweißdruck (e) eingestellt werden. In diesem Zustand liegt bereits ein eingeschwungener Zustand vor. Zudem kann es bereits zu einer leichten Erwärmung von Sonotrode und Gegenwerkzeug kommen.

An die Standbyphase II schließt sich die Startphase III an. Innerhalb dieser Startphase wird die Schweißgeschwindigkeit (a) von null auf den vorbestimmten Wert erhöht. Der Zeitpunkt, an welchem die Schweißgeschwindigkeit von null erhöht wird, ist in der Grafik besonders gekennzeichnet.

Gleichzeitig wird die Schweißamplitude (d) auf einen vorbestimmten Wert erhöht, genauso wie dies für den Schweißdruck (e) der Fall ist. Hier kommt es bereits zu einem deutlichen Temperaturanstieg (s. Darstellung g). Sobald die IST-Temperatur die SOLL-Temperatur erreicht, wird in die Schweißphase IV übergegangen. Der Übergang ist in der Grafik besonders gekennzeichnet. Nur in der Schweißphase wird die Schweißamplitude (d) und damit auch der Schweißdruck (e) variiert und zwar in Abhängigkeit von der Differenz zwischen der gemessenen IST-Temperatur (g) und der vorbestimmten SOLL-Temperatur (f). Sobald der Schweißvorgang beendet ist, wird dann in Phase V übergegangen, die wieder eine Standbyphase ist. Gegebenenfalls kann sich dann die Phase VI, die eine Stoppphase ist und im Wesentlichen der Phase I entspricht, anschließen. Alternativ kann jedoch aus der Standbyphase V auch wieder in die Startphase III mit sich anschließender Schweißphase IV eingetreten werden.

Die eigentliche Regelung (b) erfolgt nur während der Schweißphase IV. Die vorgeschaltete Standbyphase II verkürzt die Einschwingzeit des Systems. Nur während der Startphase III, in welcher noch keine Regelung erfolgt, kann es zu Ausschussproduktionen kommen. Daher ist die Phase III möglichst kurz zu gestalten.

### Bezugszeichenliste

- 1: Sonotrode
- 2: Gegenwerkzeug / Amboss
- 3: Temperatursensor
- 4: Materialbahn
- 5: Materialbahn
- 6: Sandwichstruktur / Sandwichbahn

## Patentansprüche

1. Verfahren zum Betreiben einer Ultraschallschweißmaschine, bei welcher während eines Schweißvorgangs ein flächiges Material (4, 5, 6) kontinuierlich durch einen zwischen einer Sonotrode (1), welche mit einer Ultraschallfrequenz in eine Schwingung mit einer Schweißamplitude angeregt wird, und einem Amboss (2) gebildeten Spalt mit einer Schweißgeschwindigkeit hindurchbewegt wird, während von dem Amboss (2) und/oder von der Sonotrode (1) eine Schweißkraft auf das flächige Material (4, 5, 6) ausgeübt wird, wobei während einer Schweißphase die IST-Temperatur des flächigen Materials (6), nachdem es den Spalt durchlaufen hat, gemessen wird, die IST-Temperatur mit einer vorbestimmten SOLL-Temperatur verglichen wird und die Schweißamplitude in Abhängigkeit von dem Vergleichsergebnis variiert wird, wobei vor der Schweißphase während einer Startphase die Schweißgeschwindigkeit von 0 auf einen vorbestimmten Schweißgeschwindigkeitswert erhöht wird, **dadurch gekennzeichnet, dass** während der Startphase keine Variation der Schweißamplitude in Abhängigkeit von dem Vergleichsergebnis erfolgt.

2. Verfahren nach Anspruch 1, **dadurch gekennzeichnet, dass** die IST-Temperatur während eines Schweißintervalls kontinuierlich geregelt wird, indem die Schweißamplitude in Abhängigkeit von dem Vergleichsergebnis variiert wird.

3. Verfahren nach einem der Ansprüche 1 bis 2, **dadurch gekennzeichnet, dass** während der Schweißphase die Schweißgeschwindigkeit und/oder die Schweißkraft konstant gehalten wird.

4. Verfahren nach einem der vorhergehenden Ansprüche, **dadurch gekennzeichnet, dass** während der Startphase die Schweißamplitude und/oder die Schweißkraft auf einen vorbestimmten Schweißamplitudenwert bzw. auf einen vorbestimmten Schweißkraftwert erhöht werden.

5. Verfahren nach einem der vorhergehenden Ansprüche, **dadurch gekennzeichnet, dass** die Startphase nach einer vorgegebenen Zeitdauer endet und die Schweißphase beginnt.

6. Verfahren nach Anspruch **4, dadurch gekennzeichnet, dass** sobald die Schweißamplitude den vorbestimmten Schweißamplitudenwert oder sobald die Schweißkraft auf den vorbestimmten Schweißkraftwert erhöht wurde, die Startphase beendet und die Schweißphase begonnen wird.

7. Verfahren nach einem der vorhergehenden Ansprüche, **dadurch gekennzeichnet, dass** vor der Startphase während einer Standbyphase die Schweißamplitude und/oder die Schweißkraft auf einem vorbestimmten reduzierten Schweißamplitudenwert bzw. auf einem vorbestimmten reduzierten Schweißkraftwert gehalten wird.

## Claims

1. A method for operating an ultrasonic welding machine, in which, during a welding process, a flat material (4, 5, 6) is continuously moved through a gap formed between a sonotrode (1), which is vibrated at an ultrasonic frequency with a welding amplitude, and an anvil (2) at a welding speed while a welding force is exerted onto the flat material (4, 5, 6) by the anvil (2) and/or the sonotrode (1), wherein, during a welding phase, the ACTUAL temperature of the flat material (6) is measured after the flat material has passed through the gap, the ACTUAL temperature is compared with a predetermined TARGET temperature, and the welding amplitude is varied on the basis of the comparison result, wherein, prior to the welding phase, during a start-up phase, the welding speed is increased from 0 to a predetermined welding speed value, **characterised in that**, during the start-up phase, no variation of the welding amplitude on the basis of the comparison result takes place.

2. The method according to claim 1, **characterised in that** the ACTUAL temperature is continuously controlled during a welding interval by varying the welding amplitude on the basis of the comparison result.

3. The method according to one of claims 1 to 2, **characterised in that**, during the welding phase, the welding speed and/or the welding force is kept constant.

4. The method according to one of the preceding claims, **characterised in that**, during the start-up phase, the welding amplitude and/or the welding force are increased to a predetermined welding amplitude value and a predetermined welding force value, respectively.

5. The method according to one of the preceding claims, **characterised in that**, after a specified amount of time, the start-up phase ends and the welding phase begins.

6. The method according to claim 4, **characterised in that**, as soon as the welding amplitude has been increased to the predetermined welding amplitude value or as soon as the welding force has been increased to the predetermined welding force value, the start-up phase is ended and the welding phase is begun.

7. The method according to one of the preceding claims, **characterised in that**, prior to the start-up phase, during a standby phase, the welding amplitude and/or the welding force is held at a predetermined reduced welding amplitude value or at a predetermined reduced welding force value.

## Revendications

1. Procédé de fonctionnement d'une machine de soudage à ultrasons dans laquelle, lors d'une action de soudage, un matériau surfacique (4, 5, 6) est déplacé en continu, avec une vitesse de soudage, à travers une fente formée entre une sonotrode (1) qui est excitée à une oscillation avec une amplitude de soudage, et une enclume (2), alors qu'une force de soudage est exercée par l'enclume (2) et/ou la sonotrode (1) sur le matériau surfacique (4, 5, 6), pendant une phase de soudage, la température réelle du matériau surfacique étant mesurée après son passage par la fente, la température réelle étant comparée à une température de consigne prédéterminée et l'amplitude de soudage étant réglée en fonction du résultat de comparaison, avant la phase de soudage, pendant une phase de démarrage, la vitesse de soudage est augmentée de 0 à une valeur prédéterminée de vitesse de soudage,
**caractérisé en ce que**, pendant la phase de démarrage, aucune variation de l'amplitude de soudage en fonction du résultat de la comparaison n'est effectuée.

2. Procédé selon la revendication 1, **caractérisé en ce que**, pendant un intervalle de soudage, la température réelle est réglée de manière continue, en variant l'amplitude de soudage en fonction du résultat de comparaison.

3. Procédé selon l'une des revendications 1 à 2, **caractérisé en ce que**, pendant la phase de soudage, la vitesse de soudage et/ou la force de soudage est maintenue constante.

4. Procédé selon l'une des revendications précédentes, **caractérisé en ce que**, pendant la phase de démarrage, l'amplitude de soudage et/ou la force de soudage est augmentée à une valeur d'amplitude de soudage prédéterminée ou à une valeur de force de soudage prédéterminée.

5. Procédé selon l'une des revendications précédentes, **caractérisé en ce que** la phase de démarrage se termine après une durée donnée et que la phase de soudage commence.

6. Procédé selon la revendication 4, **caractérisé en ce que** la phase de départ est terminée et la phase de soudage commencée dès que l'amplitude de soudage a atteint la valeur d'amplitude de soudage prédéterminée ou dès que la force de soudage a été augmentée à la valeur de force de soudage prédéterminée.

7. Procédé selon l'une des revendications précédentes, **caractérisé en ce que**, avant la phase de départ pendant une phase standby, l'amplitude de soudage et/ou la force de soudage est maintenue à une valeur d'amplitude de soudage prédéterminée réduite ou à une valeur de force de soudage prédéterminée réduite.
